# EUROPÄISCHE PATENTSCHRIFT

(11) **EP 2 437 968 B1**
(45) Veröffentlichungstag und Bekanntmachung des Hinweises auf die Patenterteilung: **24.04.2019**
(21) Anmeldenummer: 10706573.2
(22) Anmeldetag: 16.02.2010
(51) Int. Cl.: B61C 11/00, B61C 7/04

(54) **ENERGIESPARENDES FAHREN VON SCHIENENFAHRZEUGEN MIT WENIGSTENS ZWEI ANTRIEBSEINHEITEN**
ENERGY-SAVING OPERATION OF RAIL VEHICLES HAVING AT LEAST TWO DRIVE UNITS
CONDUITE ÉCONOME EN ÉNERGIE DE VÉHICULES SUR RAILS AVEC AU MOINS DEUX UNITÉS D'ENTRAÎNEMENT

(30) Priorität: 03.06.2009 DE 102009024146
(43) Veröffentlichungstag der Anmeldung: 11.04.2012
(73) Patentinhaber: Siemens Mobility GmbH, 81739 München (DE)
(72) Erfinder: LAUER, Stefan, 91052 Erlangen (DE); RASCHE, Jens, 90427 Nürnberg (DE)
(86) Internationale Anmeldenummer: PCT/EP2010/051879
(87) Internationale Veröffentlichungsnummer: WO 2010/139489

(56) Entgegenhaltungen:
- EP-A1- 2 055 548
- EP-A2- 1 849 676
- EP-A2- 1 849 676
- WO-A1-2007/143850
- WO-A2-2006/028638
- WO-A2-2006/116479
- WO-A2-2008/073353
- DE-A1- 19 718 425

## Beschreibung

Die Erfindung betrifft ein Verfahren zur Steuerung des Antriebs eines Schienenfahrzeuges, das einen Antrieb mit mehreren Antriebseinheiten aufweist, bei dem die Antriebseinheiten dem Antrieb zugeschaltet oder von diesem abgeschaltet werden, so dass die Summe der Traktionskräfte der Antriebseinheiten größer ist als die erforderliche Zugkraft.

Die Erfindung betrifft ferner ein Schienenfahrzeug mit einem wenigstens zwei Antriebseinheiten aufweisenden Antrieb und einer mit dem Antrieb verbundenen Steuereinheit, die zum Ein- und Ausschalten der Antriebseinheiten eingerichtet ist.

Ein solches Verfahren und ein solches Schienenfahrzeug sind aus der WO 2007/143850 bereits bekannt. Dort ist ein Schienenfahrzeug mit mehreren Schienenfahrzeugen beschrieben, wobei die Anzahl der zum Antrieb des Schienenfahrzeugs verwendeten Antriebseinheiten von dem Lokomotivführer von Hand bestimmt werden.

Aus der DE 197 18 425 A1 ist ein Schienenfahrzeug bekannt, das einen Elektro- sowie einen oder zwei Dieselmotoren aufweist. Die Anzahl und die Art der eingesetzten Antriebseinheiten werden vor Beginn der Fahrt festgelegt und während der Fahrt nicht geändert.

Aus dem Güterbahnenbetrieb sind Doppellokomotiven bekannt, bei denen die notwendige Traktionskraft von zwei Teillokomotiven oder mit anderen Worten Antriebseinheiten bereitgestellt wird. Ist eine hohe Zugkraft erforderlich, beispielsweise bei schwerer Ladung und teilweise steilem Anstieg des Fahrwegs, bleiben beide Teillokomotive fortwährend eingeschaltet, auch wenn die hohe Zugkraft nur auf einem kleinen Teilstück der Gesamtfahrstrecke erforderlich ist. Dem vorbekannten Verfahren und dem vorbekannten Schienenfahrzeug haftet daher der Nachteil an, dass durch den Betrieb beider Teillokomotiven ein hoher Energieverbrauch entsteht mit hohen Betriebskosten im Gefolge.

Aus der europäischen Patentanmeldung EP 1 849 676 A2 ist eine Vorrichtung zur Motorisierung eines Schienenfahrzeugs mit zwei Verbrennungsmotoren bekannt, die über einen Leistungssummierer miteinander verbunden sind. Bei zwei gleichartigen Verbrennungsmotoren, die im gleichen Drehmomentbereich betrieben werden, gibt der Leistungssummierer die bezogen auf einen einzelnen Motor doppelte Energie aus. Diese Energie wird daraufhin dem Antriebsmodul eines angetriebenen Rades des Schienenfahrzeugs zur Verfügung gestellt. Im Teillastbertrieb, z.B. beim Ausrollen kurz vor einem Halt am Bahnsteig oder beim antriebsarmen Rollen abwärts eines Gefälles, kann z.B. ein Motor abgeschaltet werden und der reduzierte Energiebedarf durch den anderen Motor gedeckt werden. Dabei wird durch eine geeignete Steuer- oder Regeleinrichtung sichergestellt, dass die von den installierten Verbrennungsmotoren zu erbringende Betriebsleistung sich im zeitlichen Mittel gleichmäßig oder nach einem festzulegenden Betriebsregime auf die installierten Motoren aufteilt.

Aufgabe der Erfindung ist es daher ein Verfahren sowie ein Schienenfahrzeug der eingangs genannten Art bereitzustellen, so dass der Energieverbrauch gesenkt werden kann.

Die Erfindung löst diese Aufgabe dadurch, dass die erforderliche Zugkraft in Abhängigkeit des Fahrwegs für Teilstrecken des Fahrwegs berechnet wird und die Anzahl der eingeschalteten Antriebseinheiten während der Fahrt verändert und an die jeweils erforderliche Zugkraft angepasst wird, wobei an den bestimmten Streckenpunkten der jeweilige Betriebspunkt des Schienenfahrzeugs ermittelt wird, für den ermittelten Betriebspunkt für jede Anzahl einschaltbarer Antriebseinheiten ein Wirkungsgrad berechnet wird, die auf diese Weise ermittelten Wirkungsgrade unter Gewinnung eines optimalen Wirkungsgrades miteinander verglichen werden und anschließend so viele Antriebseinheiten eingeschaltet werden, dass deren Anzahl der Anzahl von Antriebseinheiten entspricht, die dem optimalen Wirkungsgrad zugeordnet sind, wobei die Wirkungsgrade sowohl hinsichtlich der Rückspeisefähigkeit im Bremsbetrieb als auch hinsichtlich der erzeugbaren Traktionskraft bestimmt werden.

Ausgehend von dem eingangs genannten Schienenfahrzeug löst die Erfindung die Aufgabe dadurch dass die Steuerungseinheit Mittel zum Bereitstellen der erforderlichen Zugkraft für bestimmte Teilstrecken des Fahrwegs aufweist, wobei die Steuerungseinheit die Anzahl der Antriebseinheiten während der Fahrt verändert und Antriebseinheiten abschaltet, so lange die Summe der Traktionskraft der eingeschalteten Antriebseinheiten größer ist als erforderliche Zugkraft der jeweiligen Teilstrecke.

Erfindungsgemäß wird ein umweltschonendes Schienenfahrzeug mit Doppel- oder Mehrfachtraktion vorgeschlagen. Hierzu weist das Schienenfahrzeug wenigstens zwei Antriebseinheiten auf, die erfindungsgemäß während der Fahrt ein- und ausgeschaltet werden können, so dass die Anzahl der betriebenen Antriebseinheiten verändert werden kann. Das Ein- und Abschalten der Antriebseinheiten erfolgt so, dass ein möglichst geringer Energieverbrauch entsteht. Die Erfindung basiert auf der Idee, dass eine grundsätzlich anwendbare Mehrfachtraktion nur dann erfolgen sollte, wenn dies aufgrund der erforderlichen Zugkraft unbedingt notwendig ist. Die notwendige Zugkraft ist zum einen vom Streckenprofil sowie vom Beladungszustand des Schienenfahrzeugs abhängig und kann mit dem Fachmann bekannten Verfahren, beispielsweise durch eine Simulation, bestimmt werden. Die Simulation benötigt als Eingangsgröße beispielsweise das Streckenprofil sowie den Beladungszustand des Schienenfahrzeugs, die Temperatur und dergleichen. In dem erfindungsgemäßen Schienenfahrzeug sind Mittel zum Bereitstellen der erforderlichen Zugkraft vorgesehen. Diese Mittel greifen auf die ermittelten Daten der Zugkraft in Abhängigkeit des Ortes zu, so dass dem Schienenfahrzeug für den jeweiligen Streckenpunkt die an diesem Ort erforderliche Zugkraft zur Verfügung steht. Wird im Rahmen der Erfindung festgestellt, dass die erforderliche Zugkraft in einem Streckenabschnitt, von nur einer Antriebseinheit bereitgestellt werden kann, können die nicht benötigten Antriebseinheiten abgeschaltet werden. Auf diese Weise wird der Elektroenergieverbrauch des Schienenfahrzeuges verringert, vor allem auch durch den Wegfall eines Teiles der Hilfsbetriebeenergie. Somit werden auch die Betriebskosten des Schienenfahrzeugs herabgesetzt. Darüber hinaus werden die abgeschalteten Antriebseinheiten weniger stark belastet.

Gemäß einer bevorzugten Ausgestaltung der Erfindung wird die erforderliche Zugkraft ortsaufgelöst vor Beginn einer Fahrt berechnet. Auf Grund der hinreichend genau bekannten Fahrstrecke und der äußeren Randbedingen der Fahrt insbesondere des Streckenprofils ist eine solche Berechnung der Zugkraft vorab möglich. Als Ergebnis dieser Berechnung vorab erhält man die erforderliche Zugkraft in Abhängigkeit bestimmter Streckenpunkte. Dabei ist es keineswegs erforderlich, die Berechnung in dem Schienenfahrzeug selbst durchzuführen. Die Berechnung kann auch außerhalb des Schienenfahrzeugs an einem externen Ort, beispielsweise in einer Leitstelle durchgeführt werden, wobei die Ergebnisse der Berechnung anschließend auf das Schienenfahrzeug beispielsweise mittels Funkübertragen, WLAN oder dergleichen übertragen werden. Das Schienenfahrzeug empfängt die übertragenen Daten und speichert diese, so dass ein beliebiger zweckmäßiger Zugriff auf die Daten während der Fahrt ermöglicht ist.

Vorteilhafterweise wird die Anzahl der eingeschalteten Antriebseinheiten an bestimmten Streckenpunkten des Fahrwegs verändert. Die Streckenpunkte werden beispielsweise fahrbahnseitig markiert, so dass das Zu- und Abschalten der Antriebseinheiten vom Lokführer von Hand durchgeführt werden kann. Abweichend davon sind an den Streckenpunkten elektrische oder induktive Markierungen in Form von Balisen oder dergleichen angeordnet, so dass das Schienenfahrzeug selbsttätig und das ohne Zutun eines Zugführers das Erreichen eines Streckenpunktes überwachen kann. Auch das Ausnutzen von Satelliten unterstützter Lokalisierungsverfahren, wie GPS oder dergleichen, ist im Rahmen der Erfindung möglich.

Weiterhin ist es vorteilhaft, wenn für jeden Streckenpunkt die erforderliche Zugkraft berechnet wird und anschließend wenigstens so viele Antriebseinheiten eingeschaltet werden, dass die Summe der Traktionskräfte der eingeschalteten Antriebseinheiten größer ist als die erforderliche Zugkraft. Durch diese Weiterentwicklung ist in jedem Streckenpunkt von neuem sichergestellt, dass immer eine ausreichend große Zugkraft bereitgestellt ist, so dass das Schienenfahrzeug seine Fahrt in jedem Falle fortsetzen kann.

Erfindungsgemäß wird an den bestimmten Streckenpunkten der jeweilige Betriebspunkt des Schienenfahrzeugs ermittelt und für den ermittelten Betriebspunkt und für jede Anzahl eingeschalteter Antriebseinheiten ein Wirkungsgrad berechnet, wobei die auf diese Weise ermittelten Wirkungsgrade unter Gewinnung eines optimalen Wirkungsgrades miteinander verglichen und anschließend so viele Antriebseinheiten eingeschaltet werden, dass deren Anzahl der Anzahl von Antriebseinheiten entspricht, die dem optimalen Wirkungsgrad zugeordnet sind. Demnach werden aus Gründen eines optimalen Energieverbrauchs an bestimmten Teilstrecken mehr Antriebseinheiten eingeschaltet, als nötig ist, um die erforderliche Zugkraft bereitzustellen. Dies basiert auf der Erkenntnis, dass der Wirkungsgrad des Antriebes günstiger sein kann, wenn mehrere Antriebseinheiten als erforderlich eingeschaltet sind. Unter Wirkungsgrad ist hier der Anteil der gewonnenen Traktionsenergie bezogen auf die eingesetzte Elektroenergie zu verstehen. Der Wirkungsgrad des Antriebes ist von verschiedenen Einflussparametern abhängig. So weisen beispielsweise die Komponenten der Antriebseinheiten, wie beispielsweise der Haupttransformator, Stromrichter, Fahrmotor, Getriebe und dergleichen, in verschiedenen Arbeitsbereichen unterschiedliche Wirkungsgrade auf. Der Wirkungsgrad des Fahrmotors variiert beispielsweise mit der Geschwindigkeit des Schienenfahrzeugs. Daher ist, bevor der Wirkungsgrad bestimmt werden kann, zunächst ein Betriebspunkt des Schienenfahrzeugs zu ermitteln. Der Betriebspunkt beschreibt den Zustand des Schienenfahrzeugs. Dieser Zustand wird durch die Geschwindigkeit des Schienenfahrzeuges, die Außentemperatur, die Steigung des Fahrwegs, die Anzahl der Wagen des Schienenfahrzeugs sowie deren Beladung, die gewählte Belüftung, die Reibung und dergleichen beschrieben. Mit diesen Angaben ist der Betriebspunkt festgelegt. Die Wirkungsgrade der einzelnen Antriebskomponenten sind tabellarisch für bestimmte Bereiche hinterlegt. Der Gesamtwirkungsgrad der jeweiligen Antriebseinheit setzt sich aus diesen Einzelwirkungsgraden ihrer Komponenten zusammen und kann durch einfache Multiplikation berechnet werden.

Zweckmäßigerweise werden die jeweiligen Betriebspunkte und die den Betriebspunkten zuordenbaren Wirkungsgrade vor Antritt der Fahrt des Schienenfahrzeuges berechnet.

Die Berechnung kann beispielsweise mit Hilfe einer elektronischen Recheneinheit durchgeführt werden.

Zweckmäßigerweise werden die Wirkungsgrade mit Hilfe eines Simulationsverfahrens für Streckenpunkte des Fahrweges bestimmt. Die Simulation benötigt - wie bereits weiter oben beschrieben - die zur Bestimmung des Betriebspunktes notwendigen Eingangsdaten, also das Streckenprofil, erlaubte Höchstgeschwindigkeiten, Temperatur, Anzahl der Wagons, Beladungsgewicht und dergleichen. Anschließend wird die Fahrt des Schienenfahrzeugs beispielsweise für einen Betrieb mit einer Antriebseinheit simuliert, wobei die Simulation ausgangsseitig die sich ergebenden Wirkungsgrade in Abhängigkeit des Streckenverlaufs bereitstellt. Anschließend wird die Simulation beispielsweise mit zwei Antriebseinheiten wiederholt. Die Wirkungsgrade sind somit ortsabhängig bekannt.

Erfindungsgemäß werden die Wirkungsgrade sowohl hinsichtlich der Rückspeisefähigkeit im Bremsbetrieb, als auch hinsichtlich der erzeugbaren Traktionsenergie bestimmt. Diese vorteilhafte Weiterentwicklung der Erfindung basiert auf der Idee, dass eine höhere Anzahl von eingeschalteten Antriebseinheiten auch dann zweckmäßig sein kann, wenn auf diese Weise mehr Energie in das Versorgungsnetz zurückgespeist werden kann.

Zweckmäßigerweise sind die Antriebseinheiten jeweils eine Teillokomotive, wobei beispielsweise zwei Teillokomotiven als Doppellokomotive ausgebildet sind und dabei jeweils eine Antriebseinheit darstellen.

Abweichend hiervon sind die Antriebseinheiten Elektroantriebe eines Drehgestells. Solche Antriebseinheiten umfassen neben dem eigentlichen Fahrmotor auch den Umrichter, Getriebe und dergleichen. Solche Antriebseinheiten sind dem Fachmann jedoch bekannt, so dass an dieser Stelle hierauf nicht genauer eingegangen zu werden braucht.

Gemäß einer Weiterentwicklung des erfindungsgemäßen Schienenfahrzeugs sind Mittel zum Bestimmen der Wirkungsgrade des Antriebes in Abhängigkeit der Anzahl der eingeschalteten Antriebseinheiten vorgesehen, wobei die Steuerungseinheit zum Einschalten so vieler Antriebseinheiten eingerichtet ist, dass ein maximaler Wirkungsgrad des Antriebs bereitgestellt ist.

Nachfolgend werden weitere Vorteile der Erfindung anhand eines Ausführungsbeispiels des erfindungsgemäßen Verfahrens und des erfindungsgemäßen Schienenfahrzeugs unter Bezug auf die Figuren beschrieben, wobei gleiche Bezugszeichen auf gleichwirkende Bauteile verweisen und wobei
- Figur 1: ein Streckenprofil einer Fahrstrecke mit der jeweils erlaubten Höchstgeschwindigkeit und
- Figur 2: die zu dem Streckenprofil gemäß Figur 1 berechnete erforderliche Zugkraft sowie die maximale Traktionsenergie einer Teillokomotive einer Doppellokomotive zeigen.

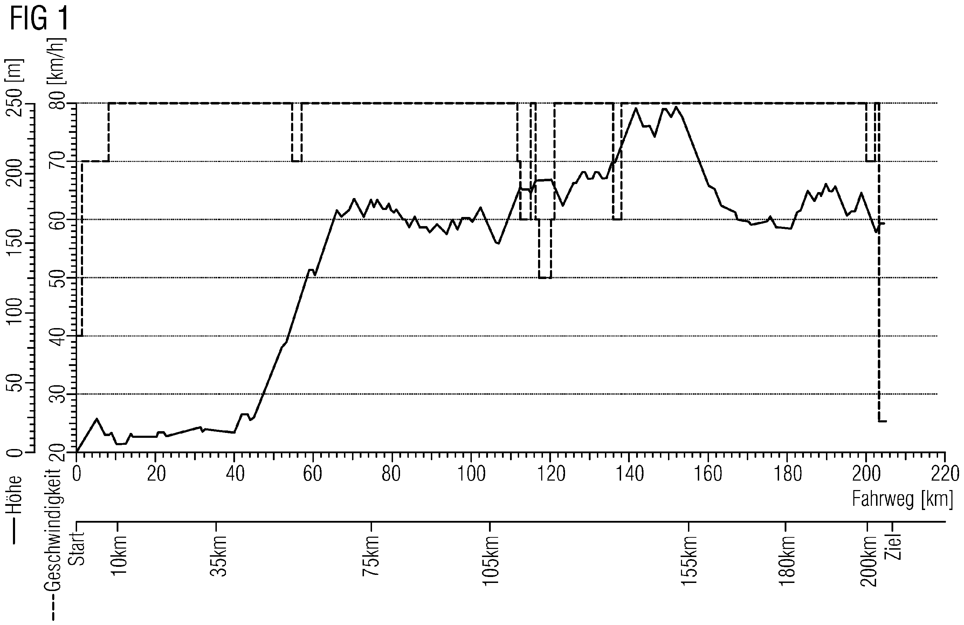

Figur 1 zeigt ein Streckenprofil in Form einer Höhenlinie sowie eine dem Streckenprofil zugeordnete Kurve der jeweils erlaubten Höchstgeschwindigkeit. Auf der Abszisse ist die Entfernung vom Ausgangsbahnhof abgetragen. Es sind zwei Ordinaten erkennbar. Die erste Ordinate weist als Maßeinheit die Geschwindigkeit auf. Der Höhenunterschied zum Ausgangsbahnhof ist auf der zweiten hinteren Ordinate in Metern abgetragen. Es ist erkennbar, dass die Fahrstrecke des Schienenfahrzeugs am Ausgangsbahnhof bei der Höhe Null Meter beginnt. Die ersten Kilometer der Strecke liegen im Stadtbereich. Daher ist eine Höchstgeschwindigkeit von nur 40 km/h erlaubt. Wie die untere Kurve zeigt, steigt der Fahrweg auf den ersten 3 km auf 6 m an. Die zulässige Höchstgeschwindigkeit beträgt hier 80 km/h. Nach 43 km steigt der Fahrweg über 10 km hinweg stark an.

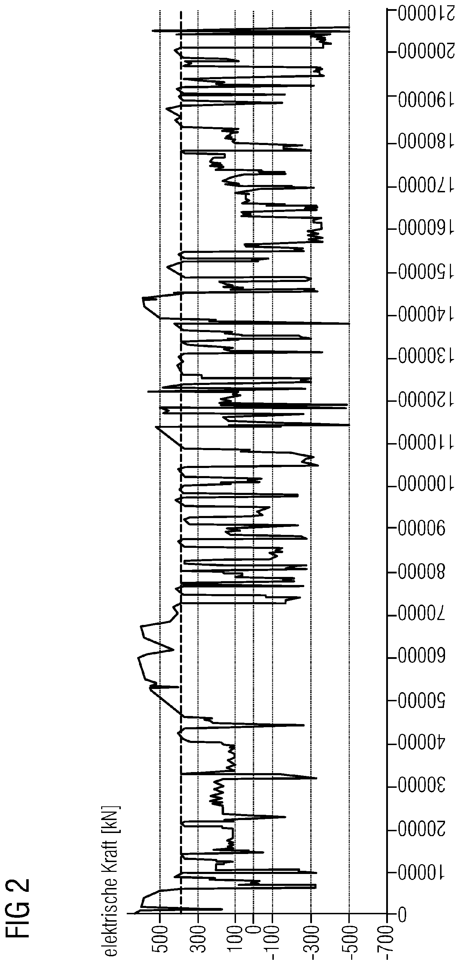

In Figur 2 zeigt ebenfalls ein Kurvendiagramm, wobei auf der Abszisse wieder die Strecke in den Einheiten Metern dargestellt ist. An der Ordinate ist die elektrische Leistung abgetragen. Die zackige Kurve zeigt die für das Streckenprofil gemäß Figur 1 berechnete erforderliche Zugkraft. Hierbei wurde von einer Doppellokomotive ausgegangen, die zwei identische Teillokomotiven aufweist. Die parallel zur Abszisse verlaufende Gerade bei 400 kN verdeutlicht die maximale Traktionsleistung einer Teillokomotive. Es ist erkennbar, dass die zackige Linie die Gerade der maximalen Traktionsleistung im Bereich starker Steigungen des Fahrweges übersteigt. In diesen Teilbereichen sind im Rahmen der Erfindung beide Teillokomotiven der Doppellokomotive eingeschaltet, so dass die erforderliche Zugkraft erzeugt werden kann. In anderen Teilstrecken ist auch der alleinige Betrieb einer einzelnen Teillokomotive ausreichend, um den Anforderungen an die Traktionsleistung des Antriebs gerecht zu werden. In diesen Bereichen kann es jedoch trotzdem hinsichtlich des Energieverbrauchs oder hinsichtlich der Rückspeisefähigkeit von Bremsenergie günstiger sein beide Teillokomotiven einzuschalten. Dies ist dann der Fall, wenn die beiden Teillokomotiven gemeinsam weniger Energie benötigen als eine Teillokomotive allein oder wenn in Bereichen mit starkem Gefälle beide Teillokomotiven mehr Energie in das Versorgungsnetz zurückspeisen können als nur eine Teillokomotive.

Der Fahrbetrieb erfolgt im Rahmen des Ausführungsbeispiels des erfindungsgemäßen Verfahrens mit zwei Teillokomotiven, wenn die erforderliche Zugkraft auf dem Streckenpunkt dies erforderlich macht, mit anderen Worten, wenn die maximale Traktionsleistung einer Teillokomotive kleiner ist als die erforderliche Zugkraft. Der Betrieb erfolgt auch dann mit zwei Teillokomotiven, wenn dadurch eine höhere Rückspeisung von Bremsenergie im Bremsbetrieb erreicht werden kann. Darüber hinaus werden auch zwei Teillokomotiven eingesetzt, wenn der Gesamtwirkungsgrad beider Teillokomotiven über dem Wirkungsgrad einer Teillokomotive auf dem Streckenpunkt liegt. Trifft keiner der vorher genannten Bedingungen zu, erfolgt der Betrieb des Schienenfahrzeugs mit einer Teillokomotive.

In Abhängigkeit des Streckenprofils wird die Anzahl der eingeschalteten Teillokomotiven daher verändert. Zunächst werden Streckenpunkte festgelegt. Die können markante Punkte sein, die den Beginn einer Steigung oder eines starken Gefälles ankündigen. Die Streckenpunkte können jedoch auch äquidistant über der Strecke verteilt werden. Für die Streckenpunkte werden zunächst die Betriebspunkte des Schienenfahrzeuges bestimmt. Wie bereits weiter oben ausgeführt wurde, kann der Betriebspunkt auch als Zustand des Schienenfahrzeuges während der Fahrt bezeichnet werden. Der Betriebspunkt umfasst Kenngrößen, wie Geschwindigkeit, Steigung des Fahrwegs im Streckenpunkt, Erwärmung der Antriebskomponenten, Drehzahlen und dergleichen mehr. Für jeden dieser Betriebspunkte wird nun ein Wirkungsgrad, also das Verhältnis der erzeugten mechanischen Traktionsenergie zur eingesetzten Elektroenergie, berechnet. Die Berechnung erfolgt mit den tabellarisch hinterlegten oder mit Formeln beschriebenen Wirkungsgraden der Komponenten der jeweiligen Antriebseinheit, wie Haupttransformator, Stromrichter, Fahrmotor, Getriebe und dergleichen. Auf diese Art und Weise werden für jeden Streckenpunkt ein Wirkungsgrad des Antriebs mit einer Teillokomotive und ein Wirkungsgrad des Antriebs mit zwei Teillokomotiven bestimmt. Gemäß eines der weiter oben dargestellten Auswahlverfahren wird die Anzahl der Antriebseinheiten oder Teillokomotiven so bestimmt, dass ein möglichst hoher Wirkungsgrad beim Bremsen oder während des Traktionsbetriebes erzeugt ist, wobei gewährleistet ist, dass eine ausreichend hohe Traktionsenergie bereitgestellt ist.

Zur Umsetzung des erfindungsgemäßen Verfahrens in einem Schienenfahrzeug sind nur geringere Aufwendungen notwendig. So ist es beispielweise möglich, die Steuerungssoftware des Antriebs der Lokomotive dementsprechend anzupassen. Die Umschaltung erfolgt beispielsweise automatisch beim Erhalt von Streckeninformationen an bestimmten Streckenpunkten, mittels Balisen oder dergleichen. Das Erreichen eines Streckenpunktes kann der Steuerungssoftware des Antriebs jedoch auch mit Hilfe von Satelliten unterstützten Lokalisierungssystemen, wie GPS oder dergleichen, gemeldet werden. Auch eine Umschaltung aufgrund von Einträgen ins Fahrtenbuch vom Fahrer ist im Rahmen der Erfindung möglich.

Erste Ergebnisse bei der Implementierung der Erfindung haben gezeigt, dass der Gesamtenergieverbrauch um 3 bis 5 % gesenkt werden kann. Darüber hinaus sind die Ausfälle der Komponenten des Antriebs verringert, da die Komponenten weniger stark belastet sind.

## Patentansprüche

1. Verfahren zur Steuerung des Antriebs eines Schienenfahrzeuges, das einen Antrieb mit mehreren Antriebseinheiten aufweist, bei dem an bestimmten Streckenpunkten die Antriebseinheiten dem Antrieb zugeschaltet oder von diesem abgeschaltet werden, so dass die Summe der Traktionskräfte der eingeschalteten Antriebseinheiten größer ist als die erforderliche Zugkraft, wobei für jeden Streckenpunkt die erforderliche Zugkraft in Abhängigkeit des Fahrwegs für Teilstrecken des Fahrwegs berechnet wird und anschließend die Anzahl der eingeschaltete Antriebseinheiten und an die jeweils erforderliche Zugkraft angepasst wird, wobei an den bestimmten Streckenpunkten der jeweilige Betriebspunkt des Schienenfahrzeugs ermittelt wird, für den ermittelten Betriebspunkt für jede Anzahl einschaltbarer Antriebseinheiten ein Wirkungsgrad berechnet wird, die auf diese Weise ermittelten Wirkungsgrade unter Gewinnung eines optimalen Wirkungsgrades miteinander verglichen werden und anschließend so viele Antriebseinheiten eingeschaltet werden, dass deren Anzahl der Anzahl von Antriebseinheiten entspricht, die dem optimalen Wirkungsgrad zugeordnet sind, wobei die Wirkungsgrade sowohl hinsichtlich der Rückspeisefähigkeit im Bremsbetrieb als auch hinsichtlich der erzeugbaren Traktionskraft bestimmt werden.

2. Verfahren nach Anspruch 1,
**dadurch gekennzeichnet, dass**
die jeweiligen Betriebspunkte und die den Betriebspunkten zuordenbaren Wirkungsgrade vor Antritt der Fahrt des Schienenfahrzeugs berechnet werden.

3. Verfahren nach einem der vorhergehenden Ansprüche,
**dadurch gekennzeichnet, dass**
die Wirkungsgrade für Streckenpunkte des Fahrwegs mit Hilfe eines Simulationsverfahrens bestimmt werden.

4. Verfahren nach einem der vorhergehenden Ansprüche,
**dadurch gekennzeichnet, dass**
die Antriebseinheiten jeweils eine Lokomotive sind.

5. Verfahren nach einem der Ansprüche 1 bis 4,
**dadurch gekennzeichnet, dass**
die Antriebseinheiten Elektroantriebsmodule eines Drehgestells sind.

6. Verfahren nach Anspruch 4,
**dadurch gekennzeichnet, dass**
zwei Lokomotiven als Doppellokomotive ausgebildet sind, wobei jede Lokomotive eine Antriebseinheit ist.

7. Verfahren nach einem der vorhergehenden Ansprüche,
**dadurch gekennzeichnet, dass**
die erforderlichen Zugkraft ortsaufgelöst vor Beginn einer Fahrt unter Gewinn eines Datensatzes berechnet wird.

8. Verfahren nach Anspruch 7,
**dadurch gekennzeichnet, dass**
der Datensatz an einem außerhalb des Schienenfahrzeugs gelegenen Ort berechnet wird und von diesem auf das Schienenfahrzeug mittels Datenkommunikation übertragen wird.

9. Schienenfahrzeug mit einem wenigstens zwei Antriebseinheiten aufweisenden Antrieb und einer mit dem Antrieb verbundenen Steuereinheit, die zum Ein- und Ausschalten der Antriebseinheiten eingerichtet ist, wobei die Steuerungseinheit Mittel zum Bereitstellen der erforderlichen Zugkraft für bestimmte Teilstrecken des Fahrwegs aufweist, wobei die Steuerungseinheit die Anzahl der Antriebseinheiten während der Fahrt verändert und an die erforderliche Zugkraft der jeweiligen Teilstrecke anpasst,
**dadurch gekennzeichnet, dass**
an den bestimmten Streckenpunkten der jeweilige Betriebspunkt des Schienenfahrzeugs ermittelt wird, für den ermittelten Betriebspunkt für jede Anzahl einschaltbarer Antriebseinheiten ein Wirkungsgrad berechnet wird, die auf diese Weise ermittelten Wirkungsgrade unter Gewinnung eines optimalen Wirkungsgrades miteinander verglichen werden und anschließend so viele Antriebseinheiten eingeschaltet werden, dass deren Anzahl der Anzahl von Antriebseinheiten entspricht, die dem optimalen Wirkungsgrad zugeordnet sind, wobei die Wirkungsgrade sowohl hinsichtlich der Rückspeisefähigkeit im Bremsbetrieb als auch hinsichtlich der erzeugbaren Traktionskraft bestimmt werden.

10. Schienenfahrzeug nach Anspruch 9, **gekennzeichnet durch**
Mittel zum Bestimmen der Wirkungsgrade des Antriebes in Abhängigkeit der Anzahl der eingeschalteten Antriebseinheiten, wobei die Steuerungseinheit zum Einschalten so vieler Antriebseinheiten eingerichtet ist, dass ein maximaler Wirkungsgrad des Antriebs bereitgestellt ist.

## Claims

1. Method for controlling the drive of a rail vehicle which has a drive comprising a plurality of drive units, in which at specific points on the route the drive units are connected to the drive or disconnected therefrom such that the sum of the traction forces of the switched-on drive units is greater than the required tractive force,
- wherein for each point on the route the required tractive force is calculated as a function of the route for sections of the route, and subsequently the number of switched-on drive units is changed and adapted to the respectively required tractive force,
- wherein at the specific points on the route the respective operating point of the rail vehicle is determined, an efficiency level is calculated for the determined operating point for each number of drive units which can be switched on, the efficiency levels which are determined in this way are compared with one another by acquiring an optimum efficiency level, and subsequently so many drive units are switched on that their number corresponds to the number of drive units which are assigned to the optimum efficiency level, the efficiency levels are determined both with respect to the feedback capability in the braking mode and with respect to the traction force which can be generated.

2. Method according to Claim 1,
**characterized in that**
the respective operating points and the efficiency levels which can be assigned to the operating points are calculated before the start of the travel of the rail vehicle.

3. Method according to one of the preceding claims,
**characterized in that**
the efficiency levels for points on the route are determined using a simulation method.

4. Method according to one of the preceding claims,
**characterized in that**
the drive units are each a locomotive.

5. Method according to one of Claims 1 to 4,
**characterized in that**
the drive units are electric drive modules of a bogie.

6. Method according to Claim 4,
**characterized in that**
two locomotives are embodied as double locomotives, wherein each locomotive is a drive unit.

7. Method according to one of the preceding claims,
**characterized in that**
the required tractive force is calculated with spatial resolution before the start of travel by acquiring a data record.

8. Method according to Claim 7,
**characterized in that**
the data record is calculated at a location outside the rail vehicle, and is transmitted therefrom to the rail vehicle by means of data communication.

9. Rail vehicle having a drive comprising at least two drive units, and a control unit which is connected to the drive and is configured to switch the drive units on and off, wherein the control unit has means for making available the required tractive force for specific sections of the route, wherein the control unit changes the number of drive units during travel and adapts it to the required tractive force of the respective section,
**characterized in that**
at the specific points on the route the respective operating point of the rail vehicle is determined, an efficiency level is calculated for the determined operating point for each number of drive units which can be switched on, the efficiency levels which are determined in this way are compared with one another by acquiring an optimum efficiency level, and subsequently so many drive units are switched on that their number corresponds to the number of drive units which are assigned to the optimum efficiency level, the efficiency levels are determined both with respect to the feedback capability in the braking mode and with respect to the traction force which can be generated.

10. Rail vehicle according to Claim 9,
**characterized by**
means for determining the efficiency levels of the drive as a function of the number of switched-on drive units, wherein the control unit is configured to switch on so many drive units that a maximum efficiency level of the drive is made available.

## Revendications

1. Procédé destiné à la commande de l'entraînement d'un véhicule ferroviaire qui présente un entraînement comprenant plusieurs unités d'entraînement ; dans lequel, à des points définis de la ligne, les unités d'entraînement sont mises en circuit par rapport à l'entraînement ou sont mises hors circuit par rapport à ce dernier, d'une manière telle que la somme des forces de traction des unités d'entraînement enclenchées est supérieure à la force de traction nécessaire ; dans lequel, pour chaque point de ligne, on calcule la force de traction nécessaire en fonction de la voie de circulation pour des lignes partielles de la voie de circulation ; et ensuite on modifie le nombre des unités d'entraînement enclenchées et on l'adapte à la force de traction chaque fois requise ; dans lequel, aux points définis de la ligne, on détermine le point de fonctionnement respectif du véhicule ferroviaire, on calcule un degré d'efficacité pour le point de fonctionnement déterminé pour chaque nombre d'unités d'entraînement qui peuvent être enclenchées ; on compare les uns aux autres les degrés d'efficacité déterminés de cette manière afin de récupérer un degré d'efficacité optimal ; et ensuite on enclenche un nombre d'unités d'entraînement tel que leur nombre correspond au nombre d'unités de fonctionnement qui sont associées au degré d'efficacité optimal ; dans lequel on définit les degrés d'efficacité aussi bien en ce qui concerne la capacité de récupération en freinage qu'en ce qui concerne la force de traction qui peut être générée.

2. Procédé selon la revendication 1, **caractérisé en ce que** les points de fonctionnement respectifs et les degrés d'efficacité qui peuvent être associés aux points de fonctionnement sont calculés avant le début du voyage du véhicule ferroviaire.

3. Procédé selon l'une quelconque des revendications précédentes, **caractérisé en ce que** les degrés d'efficacité pour des points de ligne du véhicule ferroviaire sont définis à l'aide d'un processus de simulation.

4. Procédé selon l'une quelconque des revendications précédentes, **caractérisé en ce que** les unités d'entraînement représentent à chaque fois une locomotive.

5. Procédé selon l'une quelconque des revendications 1 à 4, **caractérisé en ce que** les unités d'entraînement représentent des modules d'entraînement électrique d'un bogie.

6. Procédé selon la revendication 4, **caractérisé en ce que** deux locomotives sont réalisées sous la forme d'une double locomotive ; dans lequel chaque locomotive représente une unité d'entraînement.

7. Procédé selon l'une quelconque des revendications précédentes, **caractérisé en ce que** la force de traction nécessaire est calculée dans des conditions de résolution spatiale avant le début d'un voyage, ce qui permet d'obtenir un ensemble de données.

8. Procédé selon la revendication 7, **caractérisé en ce que** l'ensemble de données est calculé à un endroit situé à l'extérieur du véhicule ferroviaire et est transmis à partir dudit endroit au véhicule ferroviaire au moyen d'une communication de données.

9. Véhicule ferroviaire comprenant un entraînement présentant au moins deux unités d'entraînement et une unité de commande reliée à l'entraînement, qui est conçue pour la mise en circuit ou la mise hors circuit par rapport aux unités d'entraînement ; dans lequel l'unité de commande présente des moyens destinés à fournir la force de traction nécessaire pour des lignes partielles définies de la voie de circulation ; dans lequel l'unité de commande modifie le nombre des unités d'entraînement au cours du voyage et les adapte à la force de traction nécessaire des lignes partielles respectives, **caractérisé en ce que**, aux points définis de la ligne, on détermine le point de fonctionnement respectif du véhicule ferroviaire, on calcule un degré d'efficacité pour le point de fonctionnement déterminé pour chaque nombre d'unités d'entraînement qui peuvent être enclenchées ; on compare les uns aux autres les degrés d'efficacité déterminés de cette manière afin de récupérer un degré d'efficacité optimal ; et ensuite on enclenche un nombre d'unités d'entraînement tel que leur nombre correspond au nombre d'unités de fonctionnement qui sont associées au degré d'efficacité optimal ; dans lequel on définit les degrés d'efficacité aussi bien en ce qui concerne la capacité de récupération en freinage qu'en ce qui concerne la force de traction qui peut être générée.

10. Véhicule ferroviaire selon la revendication 9, **caractérisé par** des moyens destinés à la définition des degrés d'efficacité de l'entraînement en fonction du nombre des unités d'entraînement enclenchées ; dans lequel l'unité de commande est conçue pour la mise en circuit d'un nombre d'unités d'entraînement tel que l'on dispose d'un degré d'efficacité maximal de l'entraînement.
